(19) Europäisches Patentamt
European Patent Office
Office européen des brevets

(11) **EP 1 872 099 B1**

(12) **EUROPÄISCHE PATENTSCHRIFT**

(45) Veröffentlichungstag und Bekanntmachung des Hinweises auf die Patenterteilung:
**15.01.2014 Patentblatt 2014/03**

(21) Anmeldenummer: **06722805.6**

(22) Anmeldetag: **19.04.2006**

(51) Int Cl.:
***G01G 15/00*** (2006.01)

(86) Internationale Anmeldenummer:
**PCT/DE2006/000686**

(87) Internationale Veröffentlichungsnummer:
**WO 2006/111147 (26.10.2006 Gazette 2006/43)**

(54) **WIEGEVORRICHTUNG UND -VERFAHREN**

WEIGHING DEVICE AND METHOD

DISPOSITIF ET PROCEDE DE PESAGE

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **19.04.2005 DE 102005018228**

(43) Veröffentlichungstag der Anmeldung:
**02.01.2008 Patentblatt 2008/01**

(73) Patentinhaber: **Wipotec Wiege- und Positioniersysteme GmbH 67657 Kaiserslautern (DE)**

(72) Erfinder: **SCHULZKI, Alexander 67705 Stelzenberg (DE)**

(74) Vertreter: **Dobler, Markus Otten, Roth, Dobler & Partner Patentanwälte Grosstobeler Strasse 39 88276 Ravensburg / Berg (DE)**

(56) Entgegenhaltungen:
**DE-A1- 4 409 908      DE-A1- 10 232 136**
**DE-A1- 19 609 431     US-A1- 2004 000 436**
**US-B1- 6 455 002**

**Beschreibung**

Die Erfindung betrifft eine Wiegevorrichtung und ein Wiegeverfahren für eine Produktionsmaschine und/oder -anlage nach den Oberbegriffen der Ansprüche 1, 2 und 21, 22 sowie eine solche Produktionsmaschine oder -anlage nach dem Oberbegriff des Anspruchs 18.

Aus dem Stand der Technik zeigt die US 6, 455, 002 B1 eine Probenröhrchen-Messvorrichtung, umfassend eine mit einer Hubvorrichtung für einen Probenaufnahmekorb ausgebildete Dehnmessstreifen-Waage und einen zur Entnahme jeweils eines einzelnen, gewogenen Probenröhrchens vorgesehenen Greifarm. Die US 2004/000436 A1 offenbart eine Brief-Wiegevorrichtung mit sukzessiver Zu- und Abfuhr von zu wiegenden Briefen.

In Produktionsmaschinen oder -anlagen werden häufig Kontrollwaagen zur Überprüfung des Gewichts der produzierten Stückgüter eingesetzt. Eine solche Kontrollwaage wird beispielsweise in der DE 196 09 431 zum Wägen von Warenpackungen eingesetzt. Bei dieser Vorrichtung werden einzelne Stückgüter über ein Wägeband geführt und während des Transports auf dem Wägeband gewogen. Über eine nachgeschaltete Etikettiereinheit wird die Ware anschließend etikettiert, wobei insbesondere die Gewichtsangabe aufgetragen wird. Derartige Vorrichtungen sind als separate Wiege- und Etikettiermaschinen im Handel erhältlich und werden üblicherweise an ein Austragband einer Produktionsmaschine- oder Anlage angefügt.

Bei dieser Art von Kontrollwaagen muss die Wiegevorrichtung an das Format des zu wiegenden Stückguts angepasst werden.

Das größte vorgesehene Stückgut muss Platz auf dem Wägeband finden, so dass dieses entsprechend groß dimensioniert sein muss. Dies hat jedoch zur Folge, dass beim Wiegen kleinen Stückguts die Bandgeschwindigkeit entsprechend hochgefahren werden muss, um einen ausreichenden Warendurchsatz zu gewährleisten.

Weiterhin muss für die Einzelwägung eine Vereinzelung der aus der Produktionsmaschine oder -anlage kommenden Stückgüter vorgenommen werden, wodurch sich der Aufwand und auch der Platzbedarf vergrößert.

Aufgabe der Erfindung ist es demgegenüber eine Vorrichtung und ein Verfahren zum Wiegen sowie eine damit betriebene Produktionamaschine oder -anlage vorzuschlagen, die platzsparend realisierbar sind und/oder die Bearbeitung von Stückgütern innerhalb einer großen Bandbreite bezüglich der Größe der Stückgüter ermöglichen.

Diese Aufgabe wird ausgehend von einer Vorrichtung und einem Verfahren der einleitend genannten Art durch die Merkmale der Ansprüche 1 und 2 sowie 21 und 22 und einer damit betriebenen Produktionsmaschine oder -anlage gelöst.

Durch die in den Unteransprüchen genannten Maßnahmen sind vorteilhafte Ausführungen und Weiterbildungen der Erfindung möglich.

Dementsprechend zeichnet sich eine Wiegevorrichtung für eine Produktionsmaschine ode= -anlage zur Bestimmung des Gewichts von einzelnen Stückgütern oder einzelnen Gruppen von Stückgütern innerhalb einer Produktionslinie mit einer Waage, die eine Wägeaufnahme für zwei oder mehrere Stückgüter und Mittel zur gemeinsamen Zufuhr von zwei oder mehreren Stückgütern auf die Wägeaufnahme und zur gemeinsamen Wägung der zwei oder mehreren Stückgüter aufweist dadurch aus, dass ein Wägeband zur sukzessiven Abfuhr einzelner zu wiegender Stückgüter oder zu wiegender Gruppen von Stückgütern mit anschließender Wägung des auf der Wägeaufnahme verbleibenden Gewichts vorgesehen ist, wobei eine Auswerteeinheit zur Bestimmung des Gewichts eines Stückguts oder des Gruppengewichs einer Gruppe von Stückgütern aus der Differenz zweier Gewichtswerte vorgesehen ist.

In einer anderen Ausführungsform der Erfindung wird eine entsprechende Wiegevorrichtung dadurch gekennzeichnet, dass Mittel zur sukzessiven Zufuhr von zwei oder mehreren Stückgütern auf die Wägeaufnahme mit sukzessiver Wägung des auf der wägeaufnahme befindlichen Gewichts und Mittel zur anschließende gleichzeitigen Abfuhr zweier oder mehrerer auf der Wägeaufnahme befindlicher Stückgüter vorgesehen sind, wobei eine Auswerteeinheit zur Bestimmung des Gewichts eines einzelnen Stückguts oder des Gruppengewichts einer Gruppe von Stückgütern aus der Differenz zweier Gewichtswerte vorgesehen ist.

In der ersten Ausführungsform werden alle gemeinsam zu wiegenden Stückgüter auf die Wägeaufnahme zugeführt und anschließend sukzessive einzeln oder in Gruppen, je nach den zu erfassenden Gerichtswerten, von der Wägeaufnahme entnommen. In der zweiten Ausführungsform hingegan werden sukzessive die zu wiegenden Stückgüter einzeln oder in Gruppen zugeführt, bis sich die maximale, gemeinsam zu wiegende Anzahl von Stückgütern auf der Wägeaufnahme befindet. Die Abfuhr von der Wägeeinhelt kann danach gleichzeitig oder nacheinander ohne Wiegevorgang komplett oder für eine Vielzahl der Stückgüter ohne weitere Wägung stattfinden.

In beiden Fällen wird zum einen die Bearbeitung von Stückgütern innerhalb einer großen Bandbreite hinsichtlich ihrer Größe möglich, d. h. es kann die volle Aufnahmekapazität der Wiegevorrichtung auch bei kleineren Stückgütern genutzt werden. Zu dem kann der Durchsatz vor allem von kleineren Stückgütern durch die erfindungsgemäßen Maßnahmen gegenüber einer Einzelwägung erhöht werden, da auch Wägungen mit zwei oder mehreren Stückgütern auf der Wägeaufnahme stattfinden können.

Weiterhin ist in beiden Fällen die Produktionslinie insgesamt weniger aufwändig. Im ersten Fall entfällt eine Vereinzelungsvorrichtung vor der Wiegevorrichtung, im zweiten Fall können unter Umständen Sortierungs- oder Gruppierungsvorrichtungen entfallen, da die Zuordnung der Stückgüter bereits auf der Wiegevorrichtung vorgenommen werden kann. Dabei ist in jedem Fall sowohl das Einzel- bzw. Gruppengewicht, als auch das Summengewicht erfassbar.

Durch die erfindungsgemäße Ausbildung der Wiegevorrichtung kann auch bei kleiner Stückgutgröße eine größere Wiegeeinheit dadurch genutzt werden, dass mehrere Stückgüter gleichzeitig mit ihrem Summengewicht gewogen werden.

Vorteilhafterweise wird hierzu der Wiegebereich der Wiegeeinheit so groß ausgelegt, dass der Wiegebereich der Wiegevorrichtung größer oder gleich dem größten auftretenden Summengewicht der Stückgüter ist.

Die Gewichtsbestimmung der einzelnen Stückgüter bzw. einer bestimmten Anzahl (Gruppe) gemeinsam zu wiegenden Stückgüter kann in vorteilhafter Weise sodann dadurch erfolgen, dass die einzelnen Stückgüter oder die entsprechende Anzahl gemeinsam zu wiegender Stückgüter nacheinander der Wiegestation zu- oder von dieser abgeführt werden. Das zu bestimmende Gewicht ergibt sich dabei aus der Änderung des durch Abfuhr oder Zufuhr des zu wiegenden Stückguts oder Stückgüter veränderten Gewichts der auf der Wiegestation befindlichen Stückgüter. Diese Änderung kann durch Subtraktion zweier Gewichte, vorzugsweise durch Subtraktion zweier nacheinander erfasster Gewichte rechnerisch bestimmt werden. Diese Vorgehensweise kann zur Bestimmung mehrerer Einzelgewichte auch mehrfach wiederholt werden.

Vorteilhafterweise werden bei einer erfindungsgemäßen Produktionsmaschine oder -anlage zwei oder mehrere Stückgüter gemeinsam der Wiegevorrichtung zugeführt, wobei von der Gesamtheit der auf oder in der Wiegevorrichtung befindlichen Stückgüter ein einzelnes Stückgut oder eine Anzahl (Gruppe) gemeinsam zu wiegender Stückgüter abgeführt werden. Durch anschließende Gewichtsermittlung des verbleibenden Stückguts bzw. der verbleibenden Stückgüter kann das Einzelgewicht der abgeführten Stückgüter bzw. das Gesamtgewicht (Gruppengewicht) der genannten Anzahl von abgeführten Stückgütern anhand der durch die Abfuhr verursachten Gewichtsverminderung bestimmt werden.

Diese Gewichtsverminderung wird, wie bereits erwähnt, in einer Auswerteeinheit rechnerisch durch Subtraktion zweier vorzugsweise aufeinanderfolgend erfasster Gewichtswerte bestimmt. Dabei wird jeweils das nach der Abfuhr der einzelnen zu wiegenden Stückgüter oder, falls das Gewicht einer Anzahl von Stückgütern ermittelt werden soll, nach der Abfuhr der zu wiegenden Anzahl von Stückgütern ermittelte Summengewicht von dem davor ermittelten Summengewicht abgezogen.

Durch die gemeinsame Zufuhr zweier oder mehrerer Stückgüter, z.B. Warenpackungen zur Wiegestation erübrigt sich eine Vereinzelungsvorrichtung vor der Wiegevorrichtung, wodurch sich ein kompakter Aufbau der Produktionsmaschine oder -anlage gibt.

In einer besonders vorteilhaften Ausführungsform der Erfindung wird eine Gewichtserfassung während der Bewegung einer oder mehrerer Stückgüter vorgesehen.

Ein solches dynamisches Wiegeverfahren während der Bewegung der Stückgüter ermöglicht, wie oben angegeben, gegenüber einem getakteten Betrieb einen schnelleren Durchsatz, so dass die Integration der Wiegevorrichtung in die Produktionsmaschine oder -anlage erleichtert wird. Im oben angeführten Ausführungsbeispiel wird demnach die Abfuhr der Stückgüter kontinuierlich betrieben, so dass die zu erfassenden Gewichte während des Transports und insbesondere während der Abfuhr der Stückgüter von der Wiegevorrichtung erfasst werden.

Die Abfuhr kann dabei auch bei kleinen Stückgütern bei hohem Durchsatz (Durchsatz - Stück/Minute) mit moderater Geschwindigkeit betrieben werden, so dass geschwindigkeitsbedingte Störungen beim Wiegevorgang vermieden werden können.

Neben der oben angeführten dynamischen Gewichtserfassung kann auch eine Gewichtserfassung eines oder mehrerer Stückgüter im Stillstand vorgesehen sein. Das Wiegen im Stillstand stellt sicher, dass keine durch die Bewegung der Stückgüter verursachten Störungen beim Wiegevorgang auftreten können.

Dabei werden bevorzugt zuvor alle auf der Wiegevorrichtung befindlichen Stückgüter bewegt, wobei vorzugsweise die Bewegung horizontal gerichtet ist. Diese Maßnahme stellt ein Beispiel dafür dar, wie die Stückgüter sukzessive durch die Bewegung auf der Wiegevorrichtung ab und/oder zuzuführen sind.

In der Ausführungsform, in der die Wiegevorrichtung bzw. die Wiegestation mit einer Fördereinheit, z. B. einem umlaufenden Wägeband versehen ist, kann diese kontinuierlich oder diskontinuierlich angetrieben werden. Die Fördergeschwindigkeit bzw. die Umlaufgeschwindigkeit bei kontinuierlichen Betrieb bzw. die Taktgeschwindigkeit bei einem diskontinuierlichen Betrieb ist dabei so festzulegen, dass nach der Zufuhr bzw. der Abfuhr der Stückgüter, deren Gewicht letztlich bestimmt werden soll, von der Wägeaufnahme bzw. dem Wägeband eine ausreichende Zeit für die nachfolgende Gewichtsbestimmung verbleibt.

Ein kontinuierlicher Betrieb, bei dem das Stückgut bzw. die Stückgüter während der Transporzbewegung gewogen werden, hat hierbei den zusätzlichen Vorteil, dass die Stückgüter keinen taktbedingten Beschleunigungs- oder Bremsvorgängen unterworfen sind, so dass dadurch hervorgerufene Probleme gleich gar nicht auftreten können und insbesondere auch die Position des Stückguts auf der Wägeaufnahme bzw. dem Wägeband von solchen Vorgängen ungestört bleibt.

Vorzugsweise wird der Wiegevorrichtung eine Transporteinheit zum Abtransport der Stückgüter nachgeordnet. Vorteilhafterweise wird dabei die Fördergeschwindigkeit der nachgeordneten Transporteinheit größer gewählt als die Fördergeschwindigkeit der Fördereinheit der Wiegevorrichtung. Hierdurch wird bei der Übergabe der Stückgüter von der Fördereinheit der Wiegevorrichtung zur nachgeordneten Transporteinheit eine Beschleunigung der Stückgüter durchgeführt, wodurch die Stückgüter schneller von der Wiegevorrichtung entnommen werden. Wird beispielsweise die Wiegevorrichtung mit einem Wägeband zur Förderung der Stückgüter versehen, das die Stückgüter auf ein nachgeordnetes Transportband übergibt, so werden die Stückgüter gewissermaßen durch das nachgeordnete, schneller laufende Transportband beschleunigt und dabei vom Wägeband schneller heruntergezogen.

Diese Ausführung bietet insbesondere beim dynamischen Wiegen Vorteile, da die Totzeit, d. h. die Zeit, die zur Entnahme der Stückgüter benötigt wird und in der nicht gewogen werden kann, durch diese Maßnahme verkürzt wird. Darüber hinaus findet durch diese Maßnahme eine Vereinzelung hinter der Wiegevorrichtung auf der nachgeordneten Transporteinheit statt, die gegebenenfalls vorteilhaft nutzbar ist.

Die Zufuhr und/oder die Abfuhr auf die Wägeaufnahme, insbesondere auf ein Wägeband wird vorzugsweise so durchgeführt, dass die Stückgüter bzw. die zu wiegenden Gruppen von Stückgütern hintereinanderliegend angeordnet sind. Dies ermöglicht einen weitgehend kontinuierlichen Betrieb, insbesondere in Verbindung mit dem oben angeführten dynamischen Wiegeverfahren.

Die Fördereinheit der Wiegevorrichtung, insbesondere in Form eines Wägebandes kann aber auch mehrspurig ausgeführt werden, so dass auch Stückgüter, die in einer Reihe quer zur Transportrichtung nebeneinander liegend auf das Wägeband verbracht werden, einzeln nacheinander von dem Wägeband abgeführt werden können. Derartige Vorrichtungen sind beispielsweise durch mehrere nebeneinander umlaufende Bänder oder Riemen mit separat ansteuerbaren Antrieben realisierbar.

Die Steuerung der Wägestation ist an die Art der Zufuhr- und Abfuhr der Stückgüter anzupassen. Insbesondere ist darauf zu achten, dass die jeweilige Einheit, die einen oder mehrere steuerbare Antriebe umfassen kann, wie o.a. derart angesteuert wird, dass die einzeln zu wiegenden Stückgüter oder die gewünschte Anzahl von gemeinsam zu wiegenden Stückgütern separat von der Wiegestation abführbar bzw. zuführbar sind, um das beschriebene Subtraktionswiegeverfahren nutzen zu können.

Der Wiegevorrichtung kann zur Erzielung einer zusätzlichen Etikettierfunktion bei Bedarf eine Etikettiereinheit nachgeordnet werden. Der Warentransport zur bzw. durch die Etikettiereinheit wird hierbei über eine entsprechende Transporteinheit, z.B. über ein Transportband realisiert. Die Etikettiereinheit kann entweder über eine mit der Wiegeeinheit gemeinsame Steuereinheit oder aber über einen entsprechenden Daten- und Steuersignalaustausch zwischen verschiedenen, verdrahteten oder drahtlos kommunizierenden Steuereinheiten zum einen mit der Gewichtsinformation der auszuzeichnenden Stückgüter versorgt und zum anderen auf den Durchfluss der zu etikettierenden Stückgüter synchronisiert werden.

Einer erfindungsgemäßen Wiegeeinheit kann bei Bedarf auch eine Sortiereinheit nachgeordnet werden, falls Stückgüter gewichtsabhängig zu sortieren sind. Dies ist insbesondere dann von Vorteil, wenn die Stückgüter an sich gleichgewichtig sein sollen, jedoch vereinzelt Abweichungen auftreten. In diesem Fall können Stückgüter mit abweichenden Gewicht von den gleichgewichtigen Stückgütern durch Betätigung der Sortiervorrichtung ausgesondert werden.

Für das beschriebene Wiegeverfahren ist es, wie o.a., von Bedeutung, die einzelnen Stückgüter bzw. die gewünschte Anzahl gemeinsam zu wiegender Stückgüter von der Wiegevorrichtung nacheinander abzuführen. Bei Verwendung eines kontinuierlich umlaufenden Wägebandes ergibt sich hierfür die Notwendigkeit eines vorgegebenen Abstandes zwischen einzelnen Stückgütern bzw. einzelnen Gruppen bestimmter Anzahl gemeinsam zu wiegenden Stückgütern. Dieser vorgegebener Mindestabstand ist erforderlich, um nach dem Verlassen des Wägebandes eine ausreichende Wiegezeit für das nachfolgend zu bestimmende Gewicht vorzusehen, bevor das nächste Stückgut von Wägeband abgeführt wird. Darüber hinaus stellt ein solcher Mindestabstand sicher, dass sich die Stückgüter bei der Abfuhr vom Wägeband nicht gegenseitig behindern, wie dies beispielsweise bei aneinanderstoßenden oder teilweise aufeinanderliegenden Stückgütern möglich wäre.

Um die gewünschte Position der Stückgüter mit dem vorgegebenen Mindestabstand einzuhalten wird vorzugsweise die Zufuhreinheit entsprechend ausgebildet, die die Stückgüter in ihrer Gesamtheit der Wiegestation zuführt. Die Zuführeinheit kann hierzu beispielsweise mit mehreren Schubelementen versehen sein, wobei jedes Schubelement an einem einzelnen Stückgut angreift und diese auf die Wägevorrichtung schiebt. Durch entsprechenden Abstand der Schubelemente, der um das gewünschte Abstandsmaß größer als das Maß des Stückguts in Schubrichtung gewählt wird, ist sodann der gewünschte Mindestabstand zwischen den einzelnen Stückgütern einstellbar.

Die Flexibilität der Vorrichtung im Hinblick auf unterschiedliche Größe der Stückgüter kann dabei beispielsweise durch verstellbare oder austauschbare Schubelemente gewährleistet bleiben.

Zur Lösung des Positionierungsproblems auf dem Wägeband sind jedoch auch anderweitige Zufuhreinheiten denkbar, beispielsweise können Greifer oder Saugheber verwendet werden, die die Stückgüter in der gewünschten Position ablegen.

Eine erfindungsgemäße Wiegevorrichtung lässt sich besonders vorteilhaft in eine Produktionsmaschine oder -anlage integrieren, da keine vorgeordnete Vereinzelungseinheit erforderlich ist. Eine erfindungsgemäße Wiegestation kann dabei problemlos im Takt einer Produktionsmaschine oder -anlage mit der von der Produktionsmaschine oder -anlage bereitgestellten Gesamtheit auszutragender Stückgüter beschickt werden, ohne dass aufwändige Puffer oder Vereinzelungseinheiten zwischengeschaltet werden müssen. Es muss lediglich die Arbeitsgeschwindigkeit der Wiegevorrichtung mit der Arbeitsgeschwindigkeit der Produktionsmaschine- oder Anlage bzw. deren letzter Bearbeitungsstation angepasst werden.

Eine solche Wiegevorrichtung ist somit unmittelbar in die Austragstrecke einer Produktionsmaschine- oder Anlage integrierbar.

In einer besonderen Ausführungsform der Erfindung werden zudem ein oder mehrere weitere Kontrolleinheiten zur Kontrolle der mit der erfindungsgemäßen Produktionsmaschine oder -anlage hergestellten Stückgüter vorgesehen. Derartige Kontrolleinheiten können der zusätzlichen Qualitätssicherung dienen. Solche Kontrolleinheiten können beispielsweise in Form eines Metalldetektors vorliegen, der der Kontrolle auf metallische Fremdkörper dient. Auch eine optische Kontrolle kann je nach Anwendungsfall sinnvoll sein, um die Stückgüter auf vollständige Beschriftung oder grundsätzlich auf das gewünschte Erscheinungsbild zu prüfen. Auch eine Leckstation kann als zusätzliche Kontrolleinheit vorgesehen werden.

Verschiedene Ausführungsbeispiele der Erfindung sind in der Zeichnung dargestellt und werden anhand der Figuren nachfolgend näher erläutert.

Im einzelnen zeigen

Figur 1     eine schematische Seitenansicht einer ersten Ausführungsform der Erfindung,

Figur 2     eine Draufsicht auf eine Ausführung gemäß Figur 1,

Figur 3     eine Seitenansicht einer zweiten Ausführungsform der Erfindung,

Figur 4     eine Draufsicht auf eine Ausführung gemäß Figur 3,

Figur 5     eine Draufsicht auf eine dritte Ausführungsform der Erfindung,

Figur 6     eine Draufsicht auf eine vierte Ausführungsform der Erfindung,

Figur 7     eine Draufsicht auf eine fünfte Ausführungsform der Erfindung und

Figur 8     eine Draufsicht auf eine sechste Ausführungsform der Erfindung.

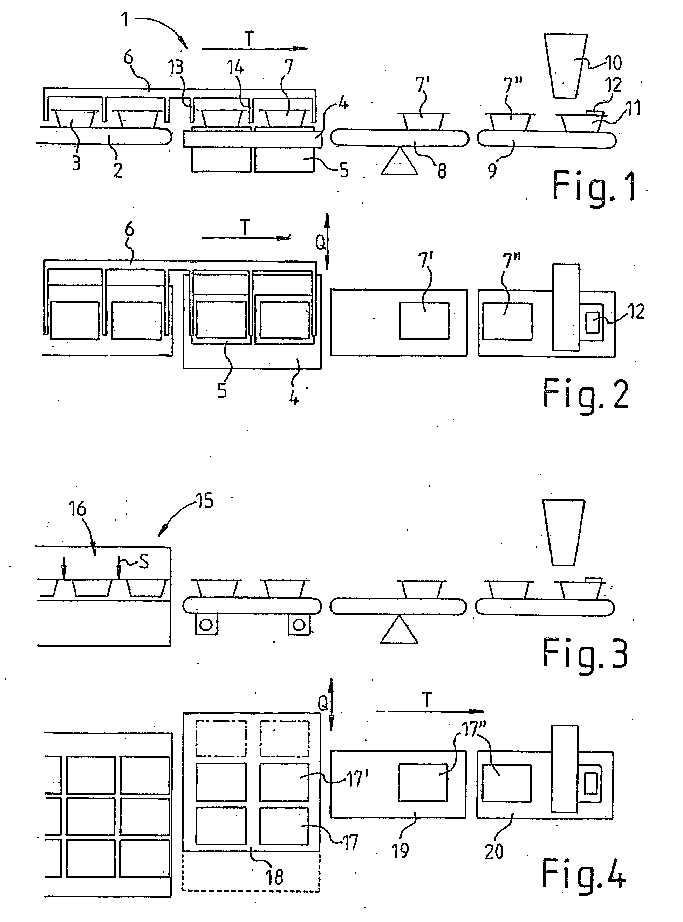

In der Seitenansicht von Figur 1 ist eine Verpackungsmaschine 1 als erfindungsgemäße Produktionsmaschine oder -anlage teilweise dargestellt. Die von der Verpackungsmaschine 1 hergestellten Packungen stellen ein Beispiel für erfindungsgemäß zu wiegende Stückgüter dar. Zu erkennen ist das hintere Ende eines Füllbandes 2, in dem die zu verpackende Ware in einzelne Schalen 3, z.B. aus Kunststoff, eingefüllt wird.

In Transportrichtung T dem Füllband 2 nachgeordnet befindet sich eine in Richtung Q (vgl. Figur 2) quer verschiebbare Schalenaufnahme 4 mit einer Hubeinheit 5, um die Schalen 3 in die Schalenaufnahme 4 abzusenken bzw. aus der Schalenaufnahme 4 anzuheben.

Über dem hinteren Ende des Füllbandes 2 sowie der Schalenaufnahme 4 befindet sich eine Schubeinheit 6. Die Schubeinheit 6 ist in der Lage, gleichzeitig mehrere, im vorliegenden Fall zwei Schalen 7 von der Schalenaufnahme 4 auf ein nachgeordnetes Wägeband 8 und zwei Schalen 3 von dem Füllband 2 auf die Schalenaufnahme 4 zu verschieben.

Eine solche Anordnung ist beispielsweise bei manchen Maschinen (sogenannten Traysealern) bekannt, bei denen einzelne separate Schalen gefüllt und versiegelt werden. Die Schalenaufnahme 4 wird hierbei in Querrichtung Q mit den darin befindlichen Schalen 7 in eine nicht näher dargestellte Versiegelungsstation verschoben und anschließend nach der Versiegelung wieder in die dargestellte Position zum Abtransport der versiegelten Schalen 7 gebracht. Dabei können auch zwei gegenläufig bewegte Schalenaufnahmen 4 vorgesehen werden, um die Schalen einer Schalenaufnahme zu versiegeln, während die andere Schalenaufnahme geräumt und wieder beschickt wird.

Die Schubeinheit 6 verschiebt demnach im vorliegenden Ausführungsbeispiel als erfindungsgemäßes Zufuhreinheit zwei versiegelte Schalen 7 gemeinsam auf das Wägeband 8.

Dem Wägeband 8 nachgeordnet ist ein Auszeichnungsband 9, über dem eine Etikettiereinheit 10 angeordnet ist. Die Etikettiereinheit 10 ist in der Lage, Etiketten auszudrucken und auf den zu etikettierenden Packungen 11 anzubringen. Ein solches Etikett 12 ist beispielhaft in den Figuren dargestellt.

Der Darstellung gemäß Figur 1 und 2 befindet sich nur noch eine Packung 7' auf dem Wägeband 8. Dies wird dadurch bewirkt, dass die Schalen 7', 7'' sukzessive vom Wägeband 8 auf das Auszeichnungsband 9 weitergefördert werden.

Demzufolge befanden sich vor dem dargestellten Zustand die beiden Schalen 7', 7'' gemeinsam auf dem Wägeband 8, auf das sie durch die Schubeinheit 6 geschoben wurden. Durch die Förderbewegung des Wägebandes 8 und des Auszeichnungsbandes 9 wurde die Schale 7'' bereits auf das Auszeichnungsband gefördert.

Die Gewichtsbestimmung der bereits vom Wägeband 8 abgeführten Schale 7'' wird eine Auswerteeinheit vorgesehen, die wie folgt arbeitet. Zunächst wurde das Summengewicht

$$G_{ges} = \sum_{i=1}^{n} G_i$$

wobei $G_{ges}$ das Summengewicht, $G_i$ das Gewicht der i-ten Schale und vorliegend n = 2 ist, beider Schalen 7' und 7'' ermittelt.

Hierzu ist der Wiegebereich des Wägebandes auf dieses Summengewicht anzupassen, d.h. $\geq G_{ges}$.

In dem dargestellten Zustand, nach dem Weitertransport der Schale 7'' auf das Auszeichnungsband 9 kann sodann das Einzelgewicht $G_1$ der nunmehr alleine auf dem Wägeband befindlichen Schale 7' ermittelt werden. Durch Subtraktion dieses Einzelgewichts von dem Gesamtgewicht

$$G_2 = G_{ges} - G_1$$

ist somit zugleich das Gewicht $G_2$ der zuvor abgeführten Schale 7'' bekannt, sodass diese von der Etikettiereinheit 10 mit der entsprechenden Gewichtsangabe versehen werden kann.

Sofern für das Gesamtgewicht mehr als zwei Schalen auf das Wägeband verbracht werden, so kann die Bestimmung des Einzelgewichts $G_n$ sukzessive in der vorbeschriebenen Weise vorgenommen werden, indem jeweils das Summengewicht ohne die einzeln abgeführten Packungen von dem zuvor ermittelten Gewicht mit der zuletzt abgeführten Packung subtrahiert wird. Allgemein ergibt sich hieraus die Formel

$$G_n = \sum_{i=1}^{n} G_i - \sum_{i=1}^{n-1} G_i \, .$$

Das gleiche Verfahren kann auch für Gruppen mit einer bestimmten Anzahl von Packungen verwendet werden, falls lediglich das Summengewicht einer solchen Anzahl und nicht das Einzelgewicht der zugehörigen Packungen bestimmt werden soll.

Das so beschriebene Verfahren wird im Folgenden als Subtraktionsverfahren bezeichnet.

Die Schubeinheit 6 umfasst verschiedene Schubelemente 13, 14, die einen größeren Abstand aufweisen als das Außenmaß der Packungen 7 in Transportrichtung T. Beim Einsatz der Schubeinheit 6 kommen die Packungen 7 an den jeweiligen Schubelementen 13, 14 zum Anschlag, sodass sich dadurch auch ein definierter Abstand zwischen den Schalen 7', 7'' beim Transport auf das Wägeband 8 ergibt. Dieser Abstand sorgt dafür, dass die Schalen 7', 7'' ohne gegenseitige Störung einzeln vom Wägeband 8 abgeführt werden können und somit die beschriebenen Wiegevorgänge ermöglicht sind.

Die Ausführungsform gemäß Figur 3 entspricht einer Anordnung mit einer sogenannten Rollenmaschine oder Tiefziehmaschine zum Herstellen der zu wiegenden Packungen. Diese Produktionsmaschine oder -anlage 15 stellt eine Vielzahl zusammenhängender Packungen her, die in einer Schneidstation 16 durch einen Schneidvorgang von einander separiert werden. Der Schneidvorgang ist durch die Pfeile S in Figur 3 angedeutet.

Bei einer solchen Produktionsmaschine- oder Anlage 15 werden demnach stets eine Vielzahl von Packungen 17 in einem Arbeitstakt bereitgestellt. Im vorliegenden Ausführungsbeispiel werden jeweils sechs Packungen 17 in zwei Reihen und drei Spuren bezogen auf die Transportrichtung bereitgestellt. Diese matrixartige Anordnung von den Packungen 17 wird zunächst auf ein Schiebeband 18 verbracht, das quer zur Transportrichtung T in Querrichtung Q verschiebbar ist. Das Schiebeband 18 umfasst Einzelbänder oder einzelne Riemen, um die einer Spur zugehörigen Packungen 17, 17', 17'' unabhängig von den Packungen der anderen Spuren in Transportrichtung T anzutreiben. Auf diese Weise können die Packungen 17, 17', 17'' jeweils einzeln auf ein nachgeordnetes Wägeband 19 gefördert werden, die durch entsprechende Querverschiebung in Richtung Q des Schiebebandes 18 vor dem Wägeband 19 platziert sind.

Zu dem in Figur 4 dargestellten Zeitpunkt wurden bereits zwei Packungen 17'' aus der ersten Spur vom Schiebeband 18 auf das Wägeband 19 verbracht. Anschließend wurde bereits eine Packung 17'' auf das Auszeichnungsband 20 weitertransportiert. Darüber hinaus hat sich das Schiebeband 18 weiter in Querrichtung Q bewegt, so dass nunmehr die Packung 17' der nächsten Spur zur Zufuhr auf das Wägeband 19 bereit stehen. Durch Wiederholung dieser Vorgänge können anschließend auch die Packungen 17 der letzten Spur dem Schiebeband 18 dem Wägeband 19 zugeführt werden.

Der Wiegevorgang selbst sowie das Etikettieren wird anschließend mit dem oben beschriebenen Subtraktionsverfahren vorgenommen.

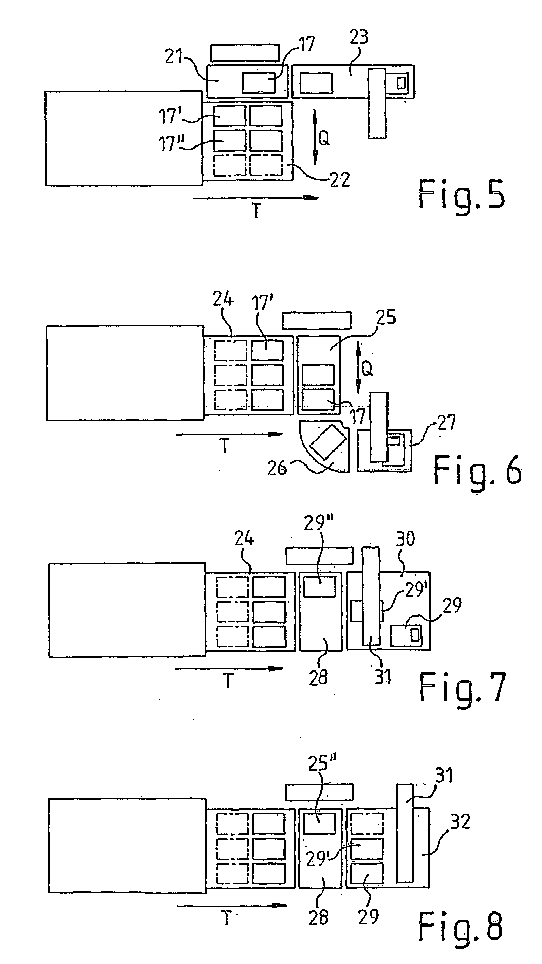

Die Ausführungsvariante gemäß Figur 5 entspricht im Wesentlichen dem vorgenannten Ausführungsbeispiel, wobei nunmehr jedoch das Wägeband 21 seitlich neben einem Austragband 22 angeordnet ist. Die Zufuhr auf das Wägeband 21 erfolgt nunmehr von dem in Transportrichtung T umlaufenden Austragband 22, von dem jeweils die Packungen 17, 17', 17'' einer Spur der in einem Arbeitstakt bereitgestellten Packungen dem Wägeband 21 in Querrichtung Q zugeführt werden. Hierzu kann eine in Querrichtung Q bewegliche, nicht näher dargestellte Schiebeeinrichtung vorgesehen werden. Der Wägevorgang auf dem Wägeband 21 sowie dem nachgeschaltetem Auszeichnungsband 23 wird wiederum in dem bereits vorgeschriebenen Subtraktionsverfahren durchgeführt.

Die Ausführungsvariante gemäß Figur 6 entspricht wiederum im Wesentlichen den beiden vorgenannten Ausführungsbeispielen, wobei nunmehr jedoch das Austragband 24 in Transportrichtung T umläuft und das Wägeband 25 in Querrichtung Q umlaufend hinter dem Austragband 24 angeordnet ist.

Bei dieser Ausführungsvariante werden durch Vorschub des Austragbandes 24 jeweils eine Reihe von Packungen 17, 17' gemeinsam dem Wägeband zugeführt. Im dargestellten Ausführungsbeispiel befinden sich somit zeitweise drei Packungen 17 auf dem Wägeband 25.

Die Abfuhr vom Wägeband 25 geschieht in Querrichtung Q auf ein Kurvenförderelement 26 mit nachgeschaltetem Auszeichnungsband 27.

Der Wiegevorgang selbst erfolgt wiederum im Subtraktionsverfahren. Zunächst werden alle drei auf dem Wägeband 25 befindlichen Packungen 17 gewogen und so das Gesamtwicht bestimmt. Nach Abfuhr der ersten Packungen 17 auf das Kurvenförderelement 26 wird das Summengewicht der verbleibenden beiden Packungen 17 gewogen, wobei durch Subtraktion von dem zuvor ermittelten Gesamtgewicht das Einzelgewicht der bereits abgeführten Packungen 17 ermittelt wird. Die beiden anschließend noch auf dem Wägeband 25 befindlichen Packungen 17 werden in der vorgeschriebenen Weise ebenfalls durch Ermittlung des Summengewichts und Subtraktion des anschließend ermittelten Gewichtswertes bestimmt.

Der Etikettiervorgang vollzieht sich in dieser Ausführung wie vorbeschrieben.

Das Ausführungsbeispiel gemäß Figur 7 zeigt eine im Hinblick auf das Austragband 24 und das Wägeband 28 vergleichbare Anordnung. Das Wägeband 28 ist jedoch nunmehr für einen mehrspurigen Antrieb ausgelegt, d.h. es umfasst mindestens drei nebeneinander umlaufende Bänder oder Riemen, sodass die Packungen 29, 29', 29'' einer Reihe sukzessive vom Wägeband 28 auf das Auszeichnungsband abgeführt werden können. Die Etikettiereinheit 31 ist dabei ebenfalls mehrspurig ausgelegt, sodass jedes durchlaufende Packungen 29, 29', 29'' mit der entsprechenden Gewichtsangabe versehen werden kann.

Der Wiegevorgang selbst erfolgt wiederum durch das oben beschriebene Subtraktionsverfahren, in dem jeweils das Einzelgewicht eines abgeführten Packungen durch Subtraktion des verbleibenden Summengewichts vom zuvor ermittelten Gesamtgewicht ermittelt wird.

Die Ausführungsform gemäß Figur 8 entspricht im Wesentlichen der Ausführung gemäß Figur 7, wobei nunmehr das Auszeichnungsband 31 getaktet betrieben wird. Das Auszeichnungsband 31 steht somit still, bis alle Packungen 29, 29', 29'' einer Reihe auf das Auszeichnungsband 31 vom Wägeband 28 abgeführt ist. Anschließend werden in einem gemeinsamen Durchlauf unter der mehrspurigen Etikettiereinheit 31 alle Packungen 29, 29', 29'' gleichzeitig auf dem Aufzeichnungsband etikettiert.

Die dargestellten Ausführungsbeispiele zeigen verschiedene Möglichkeiten für Einsatz erfindungsgemäßer Wiegevorrichtungen in Produktionsmaschine- oder Anlagen. Allen Ausführungsbeispielen gemeinsam ist der Umstand, dass die Zufuhreinheit zur gemeinsamen Zufuhr von zwei oder mehreren Packungen zur Wiegeeinheit und die Abfuhreinheit zur Abfuhr einzelner Packungen oder einzelner Gruppen von gemeinsam zu wiegenden Packungen ausgebildet ist, wobei eine Gewichtsbestimmung der gemeinsam zugeführten Packungen vorgesehen ist.

Bezugszeichenliste:

| 1 | Produktionsmaschine- oder Anlage |
|---|---|
| 2 | Füllband |
| 3 | Schale |
| 4 | Schalenaufnahme |
| 5 | Hubeinheit |
| 6 | Schubeinheit |
| 7 | Schale |
| 8 | Wägeband |
| 9 | Auszeichnungsband |
| 10 | Etikettiereinheit |
| 11 | etikettierte Packung |
| 12 | Etikett |
| 13 | Schubelement |
| 14 | Schubelement |
| 15 | Produktionsmaschine- oder Anlage |
| 16 | Schneidstation |
| 17 | Packung |
| 18 | Schiebeband |
| 19 | Wägeband |
| 20 | Auszeichnungsband |
| 21 | Wägeband |
| 22 | Austragband |
| 23 | Auszeichnungsband |
| 24 | Austragband |
| 25 | Wägeband |
| 26 | Kurvenförderelement |
| 27 | Auszeichnungsband |
| 28 | Wägeband |
| 29 | Packung |
| 30 | Auszeichnungsband |
| 31 | Etikettiereinheit |
| 32 | Auszeichnungsband |

**Patentansprüche**

1. Wiegevorrichtung für eine Produktionsmaschine oder -anlage zur Bestimmung des Gewichts von einzelnen Stückgütern oder von einzelnen Gruppen von Stückgütern innerhalb einer Produktionslinie mit einer Waage, die eine Wägeaufnahme für zwei oder mehrere Stückgüter aufweist, wobei eine Auswerteeinheit zur Bestimmung des Gewichts eines stückguts oder des Gruppengewichts einer Gruppe von Stückgütern aus der Differenz zweier Gewichtswerte vorgesehen ist, **dadurch gekennzeichnet dass** Mittel zur gemeinsamen Zufuhr von zwei oder mehreren Stückgütern auf die Wägeaufnahme und zur gemeinsamen Wägung der zwei oder mehrere Stückgüter vorgesehen sind, und dass ein Wägeband zur sukzessiven Abfuhr einzelner zu wiegender Stückgüter oder zu wiegender Gruppen von Stückgütern mit anschließender Wägung des auf der Wägeaufnahme verbleibenden Gewichts vorgesehen ist.

2. Wiegevorrichtung für eine Produktionsmaschine oder -anlage zur Bestimmung des Gewichts von einzelnen Stückgütern oder von einzelnen Gruppen von Stückgütern innerhalb einer Produktionslinie mit einer Waage, die eine Wägeaufnahme für zwei oder mehrere Stückgüter aufweist, wobei Mittel zur sukzessiven Zufuhr von zwei oder mehreren Stückgütern auf die Wägeaufnahme mit sukzessiver Wägung des auf der Wägeaufnahme befindlichen Gewichts und eine Auswerteeinheit zur Bestimmung des Gewichts eines einzelnen Stückguts oder des Gruppengewichts einer Gruppe von Stückgütern aus der Differenz zweier Gewichtswerte vorgesehen sind, **dadurch gekennzeichnet dass** Mittel zur anschließenden gleichzeitigen Abfuhr zweier oder mehrerer auf der Wägeaufnahme befindlicher Stückgüter vorgesehen sind.

3. Vorrichtung nach Anspruch 1 oder 2, **dadurch gekennzeichnet, dass** der Wiegebereich der Wiegevorrichtung (8) größer oder gleich dem größten vorgesehenen Summengewicht der Stückguts (7', 7'') ist.

4. Vorrichtung nach einem der vorgenannten Ansprüche, **dadurch gekennzeichnet, dass** die Stückgüter bzw. die Gruppen von Stückgütern, deren Gewicht zu bestimmen ist, bezogen auf die Förderrichtung hintereinander auf die Wägeaufnahme (8) zuführbar sind.

5. Vorrichtung nach einem der vorgenannten Ansprüche, **dadurch gekennzeichnet, dass** eine Gewichtserfassung während der Bewegung eines oder mehrerer Stückgüter (7, 7', 7'') vorgesehen ist.

6. Vorrichtung nach einem der vorgenannten Ansprüche, **dadurch gekennzeichnet, dass** eine Gewichtserfassung eines oder mehrerer Stückgüter im Stillstand vorgesehen ist.

7. Vorrichtung nach einem der vorgenannten Ansprüche, **dadurch gekennzeichnet, dass** eine Gewichtserfassung eines oder mehrerer Stückgüter im Stillstand vorgesehen ist, wobei vorher eine Bewegung aller auf der Wiegevorrichtung befindlichen Stückgüter stattgefunden hat.

8. Vorrichtung nach einem der vorgenannten Ansprüche, **dadurch gekennzeichnet, dass** die Wiegevorrichtung eine Fördereinheit (8) umfasst.

9. Vorrichtung nach einem der vorgenannten Ansprüche, **dadurch gekennzeichnet, dass** die Fördereinheit der Wiegevorrichtung als Wägeband (8) ausgebildet ist.

10. Vorrichtung nach einem der vorgenannten Ansprüche, **dadurch gekennzeichnet, dass** eine Steuereinheit für die Fördereinheit (8) der Wiegevorrichtung vorgesehen ist, die zur Abfuhr oder Zufuhr einzelner Stückgüter (7', 7'') oder einer Anzahl gemeinsam zu wiegender Stückgüter ausgebildet ist.

11. Vorrichtung nach einem der vorgenannten Ansprüche, **dadurch gekennzeichnet, dass** der Wiegevorrichtung eine Transporteinheit zum Abtransport der Stückgüter nachgeordnet ist, deren Fördergeschwindigkeit größer ist als die Fördergeschwindigkeit der Fördereinheit (8) der Wiegevorrichtung.

12. Vorrichtung nach einem der vorgenannten Ansprüche, **dadurch gekennzeichnet, dass** der Fördereinheit (8) der Wiegevorrichtung ein Transportband (23) nachgeordnet und/oder vorgelagert ist.

13. Vorrichtung nach einem der vorgenannten Ansprüche, **dadurch gekennzeichnet, dass** die Zufuhreinheit (6) Mittel zur Beabstandung einzelner Stückgüter (7', 7'') oder einzelner Gruppen bestimmter Anzahl von Stückgüter aufweist.

14. Vorrichtung nach einem der vorgenannten Ansprüche, **dadurch gekennzeichnet, dass** die Zufuhreinheit eine Schubeinrichtung (6) umfasst.

15. Vorrichtung nach einem der vorgenannten Ansprüche, **dadurch gekennzeichnet, dass** die Schubeinrichtung (6) zwei oder mehrere Schubelemente (13, 14) umfasst.

16. Vorrichtung nach einem der vorgenannten Ansprüche, **dadurch gekennzeichnet, dass** die Schubelemente (13, 14) einen größeren Abstand aufweisen, als das Außenmaß der zu wiegenden Stückguts (7, 7', 7'') in Schubrichtung (T).

17. Vorrichtung nach einem der vorgenannten Ansprüche, **dadurch gekennzeichnet, dass** eine Etikettiervorrichtung (10) vorgesehen ist.

18. Produktionsmaschine oder -anlage, **dadurch gekennzeichnet, dass** sie eine Wiegeeinheit (8) gemäß einem der vorgenannten Ansprüche umfasst.

19. Produktionsmaschine oder -anlage nach Anspruch 18, **dadurch gekennzeichnet, dass** eine Zufuhreinheit (6) zur Wiegevorrichtung (8) zugleich als Abfuhreinheit aus einer Bearbeitungsstation der Produktionsmaschine oder -anlage vorgesehen ist.

20. Produktionsmaschine oder -anlage nach einem der vorgenannten Ansprüche 18 oder 19, **dadurch gekennzeichnet, dass** eine zusätzliche Kontrolleinheit zur Kontrolle der Stückgüter vorgesehen ist.

21. Verfahren zum Wiegen von Stückgütern, die von einer Produktionsmaschine oder -anlage bereitgestellt werden, wobei einzelne zu wiegende Stückgüter oder zu wiegende Gruppen von Stückgüter mittels eines Wägebandes sukzessiv von der Wägeaufnahme entnommen werden und sukzessive das auf der Wägeaufnahme verbleibende Gewicht gewogen wird, wobei das Gewicht eines Stückguts oder das Gruppengewicht einer Gruppe von Stückgütern aus der Differenz zweier Gewichtswerte mittels einer Auswerteeinheit bestimmt wird, **dadurch gekennzeichnet dass** zwei oder mehrere Stückgüter gemeinsam auf die Wägeaufnahme zugeführt und gemeinsam auf der Wägeaufnahme gewogen werden.

22. Verfahren zum Wiegen von Stückgütern, die von einer Produktionsmaschine oder -anlage bereitgestellt werden, wobei zwei oder mehrere Stückgüter, deren Gewicht zu bestimmen ist, sukzessiv auf die Wägeaufnahme zugeführt werden und sukzessiv das auf der Wägeaufnahme befindliche Gewicht gewogen wird und wobei das Gewicht eines einzelnen Stückguts oder ein Gruppengewicht einer Gruppe von Stückgütern aus der Differenz zweier Gewichtswerte mittels einer Auswerteeinheit bestimmt wird, **dadurch gekennzeichnet dass** anschließend zwei oder mehrere auf der Wägeaufnahme befindlichen Stückgüter gleichzeitig von der Wägeaufnahme abgeführt werden.

**Claims**

1. A weighing device for a production machine or production facility for determining the weight of individual unit loads or of individual groups of unit loads within a production line with a scale, which has a weighing receptacle for two or more unit loads, wherein an evaluation unit is provided for determining the weight of a unit load or the group weight of a group of unit loads from the difference of two weight values, **characterized in that** the means for the joint supply of two or more unit loads to the weighing receptacle and for the joint weighing of the two or more unit loads are provided and that a weighing belt is provided for the successive removal of individual unit loads to be weighed or groups of unit loads to be weighted with subsequent weighing of the weight remaining on the weighing receptacle.

2. A weighing device for a production machine or production facility for determining the weight of individual unit loads or of individual groups of unit loads within a production line with a scale, which has a weighing receptacle for two or more unit loads, wherein the means are provided for the successive supply of two or more unit loads to the weighing receptacle with successive weighing of the weight located on the weighing receptacle and an evaluation unit for determining the weight of an individual unit load or the group weight of a group of unit loads from the difference of two weight values, **characterized in that** the means are provided for the subsequent simultaneous removal of two or more unit loads located on the weighting receptacle.

3. A device according to claim 1 or 2, **characterized in that** the weighing area of the weighing device (8) is greater or equal to the largest specified total weight of the unit load (7', 7").

4. A device according to one of the aforementioned claims, **characterized in that** the unit loads or the groups of unit loads, the weight of which is to be determined, can be supplied with regard to the conveying direction one after another to the weighing receptacle (8).

5. A device according to one of the aforementioned claims, **characterized in that** a weight measurement is provided during the movement of one or more unit loads (7, 7', 7").

6. A device according to one of the aforementioned claims, **characterized in that** the weight measurement of one or more unit loads in standstill is provided.

7. A device according to one of the aforementioned claims, **characterized in that** a weight measurement of one or more unit loads in standstill is provided, wherein a movement of all unit loads located on the weighing device has taken place beforehand.

8. A device according to one of the aforementioned claims, **characterized in that** the weighing device comprises a conveyor unit (8).

9. A device according to one of the aforementioned claims, **characterized in that** the conveyor unit of the weighing device is designed as a weighing belt (8).

**10.** A device according to one of the aforementioned claims, **characterized in that** a control unit is provided for the conveyor unit (8) of the weighing device, which is designed for removal or supply of individual unit loads (7', 7") or of a number of unit loads to be weighed jointly.

**11.** A device according to one of the aforementioned claims, **characterized in that** a transport unit for the removal of the unit loads is downstream of the weighing device, whose conveyor speed is greater than the conveyor speed of the conveyor unit (8) of the weighing device.

**12.** A device according to one of the aforementioned claims, **characterized in that** a conveyor belt (23) is downstream and/or upstream of the conveyor unit (8) of the weighing device.

**13.** A device according to one of the aforementioned claims, **characterized in that** the supply unit (6) has the means for the spacing of individual unit loads (7', 7") or individual groups of a specific number of unit loads.

**14.** A device according to one of the aforementioned claims, **characterized in that** the supply unit comprises a thrust device (6).

**15.** A device according to one of the aforementioned claims, **characterized in that** the thrust device (6) comprises two or more thrust elements (13, 14).

**16.** A device according to one of the aforementioned claims, **characterized in that** the thrust elements (13, 14) have a greater distance than the outer dimension of the unit load to be weighed (7, 7', 7") in the thrust direction (T).

**17.** A device according to one of the aforementioned claims, **characterized in that** a labeling device (10) is provided.

**18.** A production machine or production facility, **characterized in that** it comprises a weighing unit (8) according to one of the aforementioned claims.

**19.** A production machine or production facility according to claim 18, **characterized in that** a supply unit (6) for the weighing unit (8) is provided at the same time as a removal unit from a processing station of the production machine or production facility.

**20.** A production machine or production facility according to one of the aforementioned claims 18 or 19, **characterized in that** an additional control unit is provided for the control of the unit loads.

**21.** A method for weighing unit loads, which are provided by a production machine or production facility, wherein individual unit loads to be weighed or groups of unit loads to be weighed are successively removed from the weighing receptacle by means of a weighing belt and the weight remaining on the weighing receptacle is successively weighed, wherein the weight of the unit load or the group weight of a group of unit loads Is determined from the difference of two weighing values by means of an evaluation unit, **characterized in that** two or more unit loads are jointly supplied to the weighing receptacle and jointly weighed on the weighing receptacle.

**22.** A method for weighing unit loads, which are provided by a production machine or production facility, wherein two or more unit loads, the weight of which is to be determined, are successively supplied to the weighing receptacle and the weight located on the weighing receptacle is successively weighed, wherein the weight of an individual unit load or a group weight of a group of unit loads is determined from the difference of two weighing values by means of an evaluation unit, **characterized in that** two or more unit loads located on the weighing receptacle are subsequently removed at the same time from the weighing receptacle.

**Revendications**

**1.** Dispositif de pesage pour une machine ou installation de production, permettant de déterminer le poids de différentes pièces ou de différents groupes de pièces à l'intérieur d'une ligne de production, comportant une balance qui comprend un dispositif de réception pour pesée, destiné à recevoir deux ou plusieurs pièces, une unité d'évaluation étant prévue pour déterminer le poids d'une pièce ou le poids d'un groupe de pièces à partir de la différence entre deux valeurs de poids, **caractérisé en ce qu'**il est prévu des moyens pour acheminer conjointement deux ou plusieurs pièces vers le dispositif de réception pour pesée et pour peser conjointement les deux ou plusieurs pièces, et **en ce qu'**il est prévu une bande de pesée pour le transport successif des différentes pièces à peser ou des différents groupes de pièces à peser, et pour la mesure consécutive du poids restant sur le dispositif de réception pour pesée.

**2.** Dispositif de pesage pour une machine ou installation de production, permettant de déterminer le poids des différentes pièces ou des différents groupes de pièces à l'intérieur d'une ligne de production, comportant une balance qui comprend un dispositif de réception pour pesée, destiné à recevoir deux ou plusieurs pièces, des moyens étant prévus pour un acheminement successif de deux ou plusieurs pièces vers le dispositif de réception, suivi d'une mesure du poids disposé sur le dispositif de réception pour pesée et une unité d'évaluation étant prévue pour déterminer le poids d'une pièce individuelle ou le poids d'un groupe de pièces à partir de la différence entre deux valeurs de poids, **caractérisé en ce que** des moyens sont prévus pour le transport simultané consécutif de deux ou plusieurs pièces disposées sur le dispositif de réception pour pesée.

3. Dispositif selon la revendication 1 ou 2, **caractérisé en ce que** la zone de pesage du dispositif de pesage (8) est supérieure ou égale au plus grand poids cumulé prévu d'une pièce (7', 7'').

4. Dispositif selon l'une quelconque des revendications précédentes, **caractérisé en ce que** les pièces ou les groupes de pièces, dont il faut déterminer le poids, peuvent être acheminés vers le dispositif de réception pour pesée (8), les uns derrière les autres par référence à la direction de transport.

5. Dispositif selon l'une quelconque des revendications précédentes, **caractérisé en ce qu'**il est prévu un enregistrement du poids pendant le déplacement d'une ou de plusieurs pièces (7, 7' 7'').

6. Dispositif selon l'une quelconque des revendications précédentes, **caractérisé en ce qu'**il est prévu un enregistrement du poids d'une ou de plusieurs pièces, lorsque celles-ci sont immobilisées.

7. Dispositif selon l'une quelconque des revendications précédentes, **caractérisé en ce qu'**il est prévu un enregistrement du poids d'une ou de plusieurs pièces, lorsque celles-ci sont immobilisées, toutes les pièces disposées sur le dispositif de pesage ayant été déplacées précédemment.

8. Dispositif selon l'une quelconque des revendications précédentes, **caractérisé en ce que** le dispositif de pesage est une unité de convoyage (8).

9. Dispositif selon l'une quelconque des revendications précédentes, **caractérisé en ce que** l'unité de convoyage du dispositif de pesage est réalisée sous la forme d'une bande de pesée (8).

10. Dispositif selon l'une quelconque des revendications précédentes, **caractérisé en ce qu'**il est prévu une unité de commande pour l'unité de convoyage (8) du dispositif de pesage, laquelle est configurée pour le transport ou l'acheminement des différentes pièces (7', 7'') ou d'un nombre de pièces à peser conjointement.

11. Dispositif selon l'une quelconque des revendications précédentes, **caractérisé en ce qu'**en aval du dispositif de pesage est montée une unité de transport, qui est destinée à transporter les pièces et dont la vitesse de transport est supérieure à la vitesse de transport de l'unité de convoyage (8) du dispositif de pesage.

12. Dispositif selon l'une quelconque des revendications précédentes, **caractérisé en ce qu'**une bande transporteuse (23) est montée en aval et/ou en amont de l'unité de convoyage (8) du dispositif de pesage.

13. Dispositif selon l'une quelconque des revendications précédentes, **caractérisé en ce que** l'unité d'acheminement (6) comporte des moyens pour espacer les différentes pièces (7', 7'') ou les différents groupes contenant un nombre déterminé de pièces.

14. Dispositif selon l'une quelconque des revendications précédentes, **caractérisé en ce que** l'unité d'acheminement comporte une unité de poussée (6).

15. Dispositif selon l'une quelconque des revendications précédentes, **caractérisé en ce que** l'unité de poussée (6) comporte deux ou plusieurs éléments de poussée (13, 14).

16. Dispositif selon l'une quelconque des revendications précédentes, **caractérisé en ce que** les éléments de poussée (13, 14) sont écartés selon une distance supérieure à la dimension extérieure de la pièce (7, 7', 7'') à peser, dans la direction de poussée (T).

17. Dispositif selon l'une quelconque des revendications précédentes, **caractérisé en ce qu'**il est prévu un dispositif d'étiquetage (10).

18. Machine ou installation de production, **caractérisée en ce qu'**elle comporte un dispositif de pesage (8) selon l'une quelconque des revendications précédentes.

19. Machine ou installation de production selon la revendication 18, **caractérisée en ce qu'**il est prévu une unité d'acheminement (6) pour le dispositif de pesage (8) en même temps qu'une unité de transport hors d'un poste de traitement de la machine ou installation de production.

20. Machine ou installation de production selon la revendication 18 ou 19, **caractérisée en ce qu'**il est prévu une unité de contrôle supplémentaire destinée à contrôler les pièces.

21. Procédé de pesage de pièces qui sont mises à disposition par une machine ou installation de production, différentes pièces à peser ou différents groupes de pièces à peser étant prélevés au moyen d'une bande de pesée successivement du dispositif de réception pour pesée et le poids restant sur le dispositif de réception pour pesée étant mesuré successivement, le poids d'une pièce ou le poids d'un groupe de pièces étant déterminé à partir de la différence entre deux valeurs de poids au moyen d'une unité d'évaluation, **caractérisé en ce que** deux ou plusieurs pièces sont acheminées conjointement vers le dispositif de réception pour pesée et sont pesées conjointement sur le dispositif de réception pour pesée.

22. Procédé de pesage de pièces qui sont mises à disposition par une machine ou installation de production, dans lequel deux ou plusieurs pièces, dont il faut déterminer le poids, sont acheminée successivement vers le dispositif de réception pour pesée et le poids situé sur le dispositif de réception pour pesée est mesuré successivement, le poids d'une pièce individuelle ou le poids d'un groupe de pièces étant déterminé à partir de la différence entre deux valeurs de poids au moyen d'une unité d'évaluation, **caractérisé en ce que** deux ou plusieurs pièces disposées sur le dispositif de réception pour pesée sont ensuite évacuées simultanément du dispositif de réception pour pesée.

Fig.1

Fig.2

Fig.3

Fig.4

EP 1 872 099 B1

Fig.5

Fig.6

Fig.7

Fig.8

14

**IN DER BESCHREIBUNG AUFGEFÜHRTE DOKUMENTE**

**In der Beschreibung aufgeführte Patentdokumente**

- US 6455002 B1
- US 2004000436 A1
- DE 19609431